# EUROPÄISCHE PATENTSCHRIFT

(11) **EP 0 796 062 B1**
(45) Veröffentlichungstag und Bekanntmachung des Hinweises auf die Patenterteilung: **07.10.1998**
(21) Anmeldenummer: 95941066.3
(22) Anmeldetag: 01.12.1995
(51) Int. Cl.: A61C 8/00, A61C 13/273

(54) **PROTHETISCHE SUPRAKONSTRUKTION**
PROSTHETIC SUPERSTRUCTURE
SUPERSTRUCTURE PROTHETIQUE

(30) Priorität: 06.12.1994 DE 9419508 U
(43) Veröffentlichungstag der Anmeldung: 24.09.1997
(73) Patentinhaber: Unger, Heinz-Dieter, 49080 Osnabrück (DE)
(72) Erfinder: Unger, Heinz-Dieter, 49080 Osnabrück (DE)
(74) Vertreter: Busse & Busse Patentanwälte
(86) Internationale Anmeldenummer: EP9504733
(87) Internationale Veröffentlichungsnummer: WO9617560

(56) Entgegenhaltungen:
- DE-A- 3 421 970
- US-A- 3 748 739
- US-A- 4 854 874

## Beschreibung

Die Erfindung bezieht sich auf eine prothetische Suprakonstruktion in einer Ausbildung gemäß dem Oberbegriff des Anspruchs 1.

Bei einer bekannten Suprakonstruktion dieser Art basiert die Riegelvorrichtung auf dem Druckknopfsystem. Eine solche Suprakonstruktion belastet das Implantat beim Abnehmen der Zahnprothese mit verhältnismäßig hohen, weitgehend unkontrollierten Zugkräften, die den einwandfreien Sitz des Implantats gefährden. Eine andere bekannte Suprakonstruktion (Prospekt Heraeus Kulzer "Schwenkriegel bausatz, Drehriegebausatz", 5. Aufl.) bedient sich der Schwenkriegeltechnik, bei der ein Schwenkriegel in und außer Eingriff mit einer Riegelausnehmung im Implantat verschwenkbar ist, um die Verbindung zwischen Zahnprothese und Anschlußteil des Implantats herzustellen bzw. aufzuheben. Eine derartige Suprakonstruktion übt zwar keine Abzugskräfte auf das Implantat aus, ist Jedoch als laborgefertigte Konstruktion verhältnismäßig teuer und erfordert eine erhebliche Anzahl von Anpassungsterminen. Der Primärteil der Verriegelung kann ferner mundhygienische Probleme bis hin zu Schleimhautentzündungen verursachen, während der Sekundärteil einen Störfaktor für Zunge und Schleimhäute bildet, da er ein einwärts vorstehendes, einigermaßen scharfkantiges Teil bildet.

Die Erfindung befaßt sich mit dem Problem, eine Suprakonstruktion zu schaffen, die bei einfacher Ausbildung und Handhabung einen hohen Tragekomfort bietet und auf das Implantat keine Abzugskräfte ausübt.

Die Erfindung löst das Problem mit einer Suprakonstruktion gemäß Anspruch 1. Hinsichtlich wesentlicher weiterer Ausgestaltungen wird auf die Ansprüche 2 bis 17 verwiesen.

Die erfindungsgemäße Suprakonstruktion ist industriell kostengünstig herstellbar, übt auf das Implantat weder beim Aufsetzen noch beim Abnehmen Kräfte aus und kann vom Träger überaus leicht bedient werden. Sie erbringt einen ausgezeichneten Tragekomfort, da sie vollständig in die Prothesenkonstruktion eingelassen ist und vorstehende Teile vermeidet, ist optisch nicht erkennbar, da alle Teile versteckt untergebracht sind. Die erfindungsgemäße Suprakonstruktion ist weiterhin verschleißfrei und bedarf keines Nachaktivierens. Sie ist mit einfachen Mitteln wirksam zu pflegen und erbringt eine Kompensationswirkung bei unterschiedlichen Einschubrichtungen. Sie ist schließlich für den Zahntechniker und den Behandelnden leicht handhabbar, problemlos austauschbar und erfordert nur wenige Sitzungen vom Beginn bis zum Abschluß der Behandlung.

Zahlreiche weitere Einzelheiten und Vorteile ergeben sich aus der nachfolgenden Beschreibung und der Zeichnung, in der ein bevorzugtes Ausführungsbeispiel des Gegenstands der Erfindung näher veranschaulicht ist. In der Zeichnung zeigen:
- Fig. 1: In einer Ausschnittdarstellung einen vertikalen Längsschnitt durch eine in einer Zahnprothese angeordnete, auf einem Implantat festgelegte Supravorrichtung nach der Erfindung,
- Fig. 2: einen Schnitt nach der Linie II-II in Fig. 1,
- Fig. 3: einen Schnitt nach der Linie III-III in Fig. 1,
- Fig. 4: eine Einzeldarstellung der Suprakonstruktion in Vorderansicht,
- Fig. 5: eine Ansicht der in Fig. 4 rechten Stirnseite der Suprakonstruktion,
- Fig. 6: einen Schnitt nach der Linie VI-VI in Fig. 7,
- Fig. 7: einen Schnitt nach der Linie VII-VII in Fig. 6,
- Fig. 8: einen Schnitt nach der Linie VIII-VIII in Fig. 6,
- Fig. 9: eine Ausschnittdarstellung der Führungs- und Verriegelungsvorrichtung für den das Betätigungsteil bildenden Zahn,
- Fig. 10: einen Schnitt nach der Linie X-X in Fig. 9,
- Fig. 11: eine Darstellung ähnlich Fig. 9 einer abgewandelten Ausführung,
- Fig. 12: einen Schnitt nach der Linie XII-XII in Fig. 11,

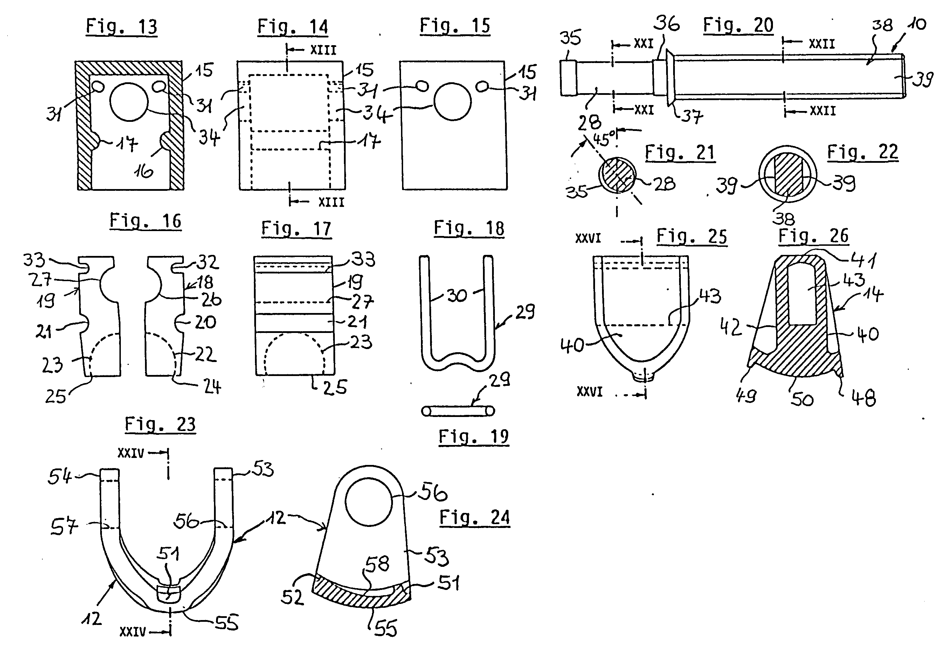

- Fig. 13: einen Schnitt durch das Gehäuse der Riegelvorrichtung nach der Linie XIII-XIII in Fig. 14,
- Fig. 14: eine Vorderansicht des Gehäuses der Riegelvorrichtung,
- Fig. 15: eine Seitenansicht des Gehäuses der Riegelvorrichtung,
- Fig. 16: eine Seitenansicht der Riegelbacken,
- Fig. 17: eine Vorderansicht einer Riegelbacke,
- Fig. 18: eine Draufsicht auf die Feder zur Vorspannung der Riegelbacken,
- Fig. 19: eine Stirnansicht zu Fig. 18,
- Fig. 20: eine Seitenansicht der Stellwelle,
- Fig. 21: einen Schnitt nach der Linie XXI-XXI in Fig. 20,
- Fig. 22: einen Schnitt nach der Linie XXII-XXII in Fig. 20,
- Fig. 23: eine Vorderansicht des Widerlagers der Führungs- und Verriegelungsvorrichtung,
- Fig. 24: eine Seitenansicht zu Fig. 23,
- Fig. 25: eine Vorderansicht des Schwenkträgers der Führungs- und Verriegelungsvorrichtung, und
- Fig. 26: einen Schnitt nach der Linie XXVI-XXVI in Fig. 25.

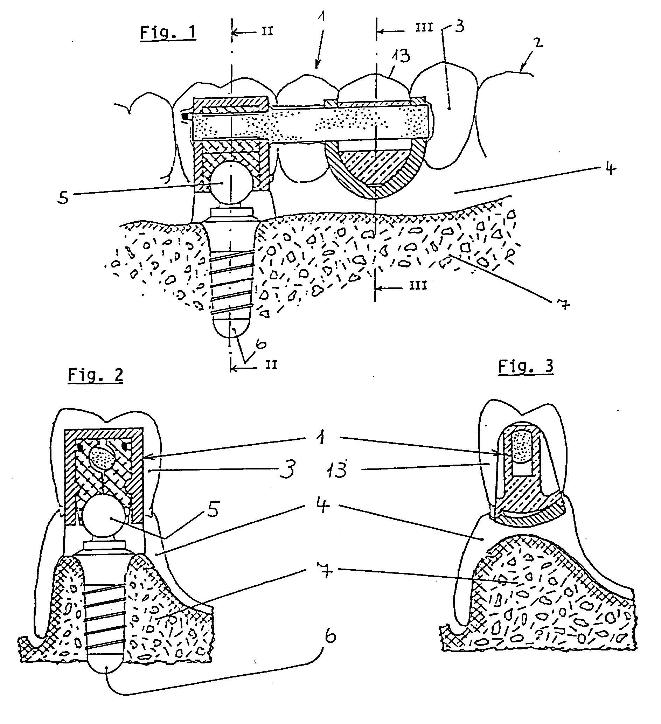

Die Fig. 1 bis 3 veranschaulichen in Ausschnittdarstellungen die Suprakonstruktion 1 erfinderungsgemäßer Ausbildung eingebaut in eine Einbaustellung in einer Zahnprothese 2 mit Zähnen 3 und Prothesensattel 4. Die Suprakonstruktion 1 ist auf dem Kugelkopf 5 eines Implantats 6 festgelegt, das in einen Kieferknochen 7 implantiert ist.

Die Suprakonstruktion 1 ist grundsätzlich für jede Art von Zahnprothesen bzw. Zahnersatz einsetzbar und für Unterkieferprothesen ebenso geeignet wie für Oberkieferprothesen. Die Zahl der je Zahnprothese eingesetzten Suprakonstruktionen 1 kann den Gegebenheiten entsprechend frei gewählt werden.

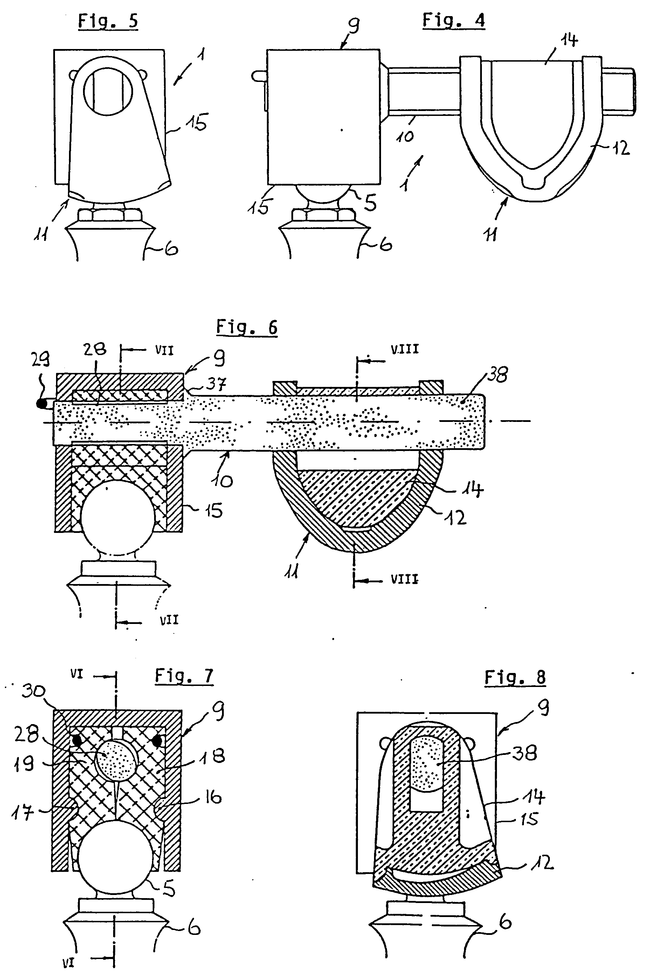

Wie sich aus der vergrößerten Darstellung der erfindungsgemäßen Suprakonstruktion 1 in Fig. 4 bis 12 näher ersehen läßt, umfaßt diese im einzelnen eine Riegelvorrichtung 9, ein Stellglied 10 in Gestalt einer Stellwelle und eine Führungs- und Verriegelungsvorrichtung 11, die aus einem Widerlager 12 und einem Schwenkträger 14 für einen das Betätigungsteil für das Stellglied 10 bildenden Zahn 13 besteht.

Die Riegelvorrichtung 9 umfaßt im einzelnen ein kieferseitig offenes Gehäuse 15, das an der Innenseite seiner vorderen und rückwärtigen Seitenwand einen zylindersegmentförmigen Lageransatz 16,17 aufweist. Ferner umfaßt die Riegelvorrichtung 9 zwei Riegelbacken 18,19, die eine untereinander gleiche Ausbildung haben und im Gehäuse 15 begrenzt gegenläufig schwenkbar abgestützt sind. Hierzu weisen die Riegelbacken 18,19 an ihrer Außenseite eine annähernd mittig angeordnete, zylindersegmentförmige, sich über die gesamte Backenbreite erstreckende Lagerausnehmung 20,21 auf, an der sie jeweils mit einem Lageransatz 16 bzw. 17 in Eingriff stehen, wenn sie sich in Einbaustellung befinden.

Die Riegelbacken haben innenseitig eine zur Oberfläche des Kugelkopfes 5 des Implantats 6 konforme, teilkugelige Ausnehmung 22,23, deren unterer Rand 24,25 in Eingriffsstellung mit dem Kugelkopf 5 die Mittelpunktebene des Kugelkopfes 5 übergreift. In Eingriffsstellung mit dem Kugelkopf 5 sichern die Riegelbacken 18,19 daher der Suprakonstruktion 1 einen festen Sitz.

An ihren in Einbaustellung einander zugewandten Innenseiten sind die Riegelbacken 18,19 mit zylindersegmentförmigen Ausnehmungen 26,27 versehen, die einen Stellraum umgrenzen, in den die Stellwelle 10 mit einem Nockenteil 28 eingreift. Dieser ist im Querschnitt elliptisch gestaltet und bildet einen Spreizkörper, der in Eingriff mit den Ausnehmungen 26,27 den Riegelbacken 18,19 eine Schwenkbewegung um die Lageransätze 16,17 am Gehäuse 15 erteilt, durch die die Riegelbacken 18,19 mit ihren Ausnehmungen 22,23 in Riegeleingriff auf dem Kugelkopf 5 des Implantats 6 gelangen. In Verriegelungsstellung ist die Hauptachse der Ellipsenkontur des Nockenteils 28 unter 45° zur Vertikalen geneigt, während sie in Entriegelungsstellung des Nockenteils 28 vertikal ausgerichtet ist. Die Lageransätze 16,17 definieren dabei Schwenkachsen für die Riegelbacken 18,19, die parallel zur Mittelachse der Stellwelle 10 ausgerichtet und im Abstand unterhalb des Nockenteils 28 gelegen sind.

Die Riegelbacken 18,19 werden in Einbaustellung von einer Feder 29 beaufschlagt, die bestrebt ist, die Riegelbacken 18,19 in ihre Entriegelungsstellung zu ziehen, in der sie sich außer Eingriff mit dem Kugelkopf 5 des Implantats 6 befinden. Die Feder 29 besteht aus einem U-förmigen Federdrahtkörper, dessen Längsschenkel 30 langlochartige Öffnungen 31 in den senkrecht zu den Lageransätzen 16,17 verlaufenden Seitenwänden des Gehäuses 15 sowie Ausnehmungen 32,33 in den Außenseiten der Riegelbacken 18,19 durchgreifen, wenn sie sich in Einbaustellung befinden.

In den gleichen Seitenwänden, in denen sich die Öffnungen 31 befinden, befinden sich Öffnungen 34, die untereinander fluchten und zur lagernden Aufnahme von zylindrischen Lagerbereichen 35,36 der Stellwelle 10 dienen. An den innenliegenden Lagerbereich 36 angrenzend ist die Stellwelle 10 mit einem Bund 37 versehen, der in Einbaustellung an der der Führungs- und Verriegelungsvorrichtung 11 zugewandten Außenseite des Gehäuses 15 anliegt und so die Stellwelle 10 in axialer Richtung positioniert. Der sich an den Bund 37 anschließende Bereich 38 der Stellwelle 10 ist an parallel gegenüberliegenden Seiten mit einer Abflachung 39 versehen, die Führungsflächen für den Schwenkträger 14 der Führungs- und Verriegelungsvorrichtung 11 bilden.

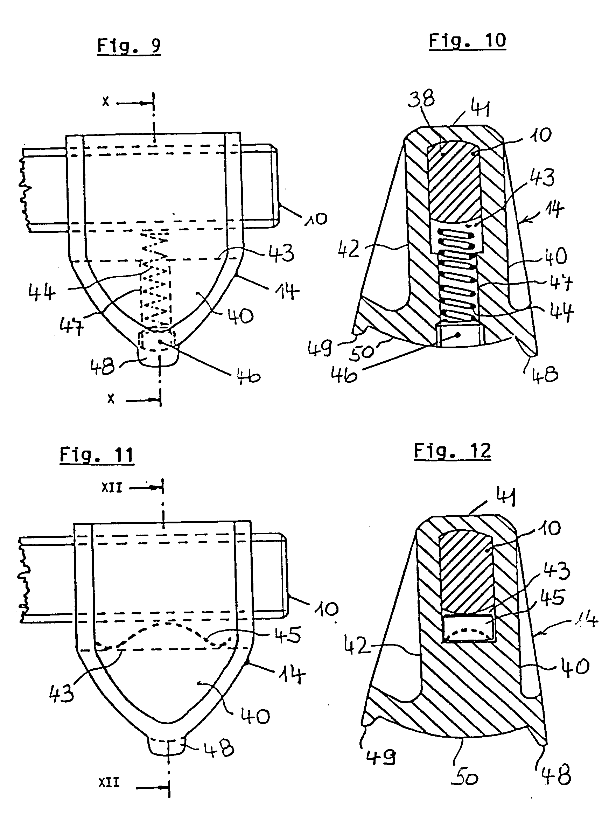

Der Schwenkträger 14 weist vorder-, ober- und rückseitig Montageflächen 40,41 und 42 für die Anbringung eines künstlichen Zahns 13 auf und umfaßt eine Ausnehmung 43 für die Aufnahme des abgeflachten Wellenbereiches 38 der Stellwelle 10, die eng an die Kontur des abgeflachten Wellenbereiches 38 angepaßt ist, in Richtung parallel zu den Abflachungen 39 jedoch eine Abmessung aufweist, welche die in gleicher Richtung vorgegebene Abmessung des abgeflachten Wellenbereichs 38 übersteigt. Dementsprechend ist der Schwenkträger 14 begrenzt radial zur Stellwelle 10 verschieblich. Im Schwenkträger 14 ist dabei eine Feder vorgesehen, die sich einseitig an der Stellwelle 10 abstützt und bestrebt ist, den Schwenkträger 14 relativ zur Stellwelle 10 in eine Grundstellung zu drücken. Diese Feder ist bei der Ausführung nach Fig. 9 und 10 als Spiraldruckfeder 44 ausgebildet, die in einer durch eine Schraube 46 verschlossenen Bohrung 47 untergebracht ist. Bei der Ausführung nach Fig. 11 und 12 ist die Feder als Blattfeder 45 ausgebildet, die mit in der Ausnehmung 43 untergebracht und in dieser fixiert ist.

Angrenzend an seine Vorder- und seine Rückseite ist der Schwenkträger 14 mit zum Widerlager 12 der Führungs- und Verriegelungsvorrichtung 11 hin vorstehenden Riegelansätzen 48,49 versehen, zwischen denen sich die bogenförmig gestaltete Unterseite 50 des Schwenkträgers 14 erstreckt. In der Grundstellung des Schwenkträgers 14 greifen die Riegelansätze 48,49 in Riegelausnehmungen 51,52 ein, die an die Vorder- und an die Rückseite des Widerlagers 12 angrenzend in diesem vorgesehen sind.

Das Widerlager 12 ist gabelförmig ausgebildet und weist Gabelschenkel 53,54 und einen Gabelboden 55 auf. Die Gabelschenkel 53,54 sind mit einander fluchtenden Lageröffnungen 56,57 für die Durchführung und Lagerung der Stellwelle 10 versehen, die sich in Einbaustellung mit ihrem abgeflachten Wellenbereich 38 in diesen aufgenommen ist. Die Gabelschenkel 53,54 sind in Einbaustellung in die beiden Zähne 3 der Zahnprothese 2 eingelassen, die dem das Betätigungsteil bildenden Zahn 13 beidseits benachbart sind. Der Gabelboden 55 ist dabei in den Prothesensattel 4 eingelassen. An seiner Oberseite weist der Gabelboden 55 eine Bahn 58 auf, die bogenförmig gekrümmt ist und eine Ablauframpe bildet.

Wie den Figuren 1 und 3 sowie 6 und 8 entnommen werden kann, umschließt das gabelförmige Widerlager 12 in Einbaustellung in der Zahnprothese 2 den Schwenkträger 14 seitlich und unterseitig, wobei in der dargestellten Grundstellung die Riegelansätze 48 und 49 in die Riegelausnehmungen 51 bzw. 52 eingreifen. In dieser Grundstellung nimmt die Stellwelle 10 und ihr Nockenteil 28 eine Winkelstellung von 45 ° zur Vertikalen ein, in der er die Riegelbacken 18,19 mit dem Kopf 5 des Implantats 6 in Verriegelungseingriff überführt hat. Zum Abnehmen der Zahnprothese 2 wird nun der den Schwenkträger 14 verdeckende Zahn 13 ein Stück angehoben, bis der Riegelansatz 49 aus der Riegelausnehmung 52 ausgehoben ist. In dieser Freigabestellung wird nun der Schwenkträger 14 mitsamt seinem Zahn 13 in Fig. 3 bzw. 8 im Uhrzeigersinn verschwenkt, bis der Riegelansatz 49 am Ende der Bahn 58 angelangt ist. Dabei genügt zunächst eine geringe Schwenkbewegung, durch die der Riegelansatz 49 über die Bahn 58 im Gabelboden 55 des Widerlagers 12 gelangt, wonach der Riegelansatz 49 auf der Bahn 58 aufgesetzt werden kann, bevor die Schwenkbewegung fortgesetzt wird. Der Riegelansatz 48 ist gegenüber dem Riegelansatz 49 länger ausgebildet, so daß nach vollständigem Abheben des Schwenkträgers 14 dieser nur im Uhrzeigersinn geschwenkt werden kann.

Sobald im Zuge der Schwenkbewegung der Riegelansatz 49 am Ende der Bahn 58 angelangt ist, befinden sich die Riegelbacken 18,19 der Riegelvorrichtung 9 in Entriegelungsstellung, so daß frei von Abzugskräften die Zahnprothese 2 abgehoben werden kann. Die Zahnprothese kann in dieser Stellung der Teile unschwer gereinigt werden, und dann die Zahnprothese frei von Druckkräften aufgesetzt werden, wobei die Suprakonstruktion 1 wieder auf ihrem zugehörigen Implantat 6 festgelegt werden kann. Hierzu genügt ein geringfügiges Anheben des Schwenkträgers 14 mit seinem Zahn 13 und anschließendes Zurückschwenken in die Grundstellung, in der der Riegeleingriff der Riegelbacken 18,19 mit dem Kugelkopf 5 durch den Nockenteil 28 wieder herbeigeführt ist. Nach Eingreifen der Riegelansätze 48,49 in die Riegelausnehmungen 51,52 ist ein sicherer Sitz der Zahnprothese 2 gewährleistet, in der die Suprakonstruktion völlig unsichtbar untergebracht ist.

Bei dem dargestellten bevorzugten Ausführungsbeispiel ist die Stellwelle einstückig ausgebildet. Es besteht jedoch auch die Möglichkeit, beispielsweise den in Fig. 6 links vom Bund 37 gelegenen Teil der Stellwelle 10 als gesondertes Teil auszubilden und mit einem Ansatzteil in dem in Fig. 6 rechts vom Bund 37 gelegenen abgeflachten Teil begrenzt um die Mittelachse der Stellwelle schwenkbar abzustützen und dabei durch eine Torsionsfeder für eine Bewegung in jene Endstellung vorzuspannen, welche der Nockenteil 28 in der Verriegelungsstellung der Riegelbacken 18,19 auf dem Kugelkopf 5 einnehmen soll. Dadurch wird die Möglichkeit geschaffen, die Riegelbacken 18,19 durch den Nockenteil 28 der Stellwelle 10 im Verriegelungssinne mit einer Kraft zu beaufschlagen, die sich aus der Vorspannung des Nockenteils 28 durch die Torsionsfeder ergibt. Dies vermeidet Überlastungen, schafft eine Selbstnachstellung und enthebt der Notwendigkeit einer sehr präzisen Winkelabstimmung der Teile aufeinander, die in der Grundstellung des Schwenkträgers 14 den Riegelbacken 18,19 gerade die Verriegelungsendstellung vorgibt.

## Patentansprüche

1. Prothetische Suprakonstruktion, mit einer auf einem Anschlußteil (5), insbesondere einem Kugelkopf eines Implantats (6) aufsetz- und an diesem festlegbaren, in einer Zahnprothese (2) unterbringbaren Riegelvorrichtung (9), **dadurch gekennzeichnet,** daß die Riegelvorrichtung (9) mittels eines Stellglieds (10) in und außer Verriegelungseingriff mit dem Auschlußteil (5) des Implantats (6) bewegbare Riegelteile (18,19) umfaßt, und daß das den Riegelteilen (18,19) abgewandte Ende des Stellglieds (10) mittels eines nahe der Riegelvorrichtung (9) in der Zahnprothese (2) angeordneten künstlichen Zahns (13) betätigbar ist.

2. Suprakonstruktion nach Anspruch 1, **dadurch gekennzeichnet,** daß der dem Stellglied (10) als Betätigungsteil zugeordnete Zahn (13) der Zahnprothese (2) gegen die Wirkung einer Federkraft und unabhängig von dem Stellglied (10) aus einer verriegelten Grundstellung auf dem Prothesensattel (4) in Richtung seiner Längsachse in eine Freigabestellung und in der Freigabestellung zusammen mit dem Stellglied (10) in eine rastgesicherte Entriegelungsstellung bewegbar ist.

3. Suprakonstruktion nach Anspruch 1 oder 2, **dadurch gekennzeichnet,** daß in Einbaustellung die Riegelvorrichtung (9) in einem ersten Zahn (3) der Zahnprothese (2) untergebracht und als Stellglied (10) eine Stellwelle vorgesehen ist, die einen dem ersten Zahn (3) benachbarten zweiten Zahn (3) der Zahnprothese durchquert und mit einem dem zweiten Zahn (3) benachbarten dritten Zahn (13) als Betätigungsteil gekuppelt ist, der mittels einer Führungs- und Verriegelungsvorrichtung (11) vom Prothesensattel (4) abheb- und schwenkbar abgestützt ist.

4. Suprakonstruktion nach einem der Ansprüche 1 bis 3, **dadurch gekennzeichnet,** daß die Riegelvorrichtung (9) ein kieferseitig offenes, zwei Riegelbacken (18,19) begrenzt gegenläufig schwenkbar abstützendes Gehäuse (15) umfaßt, die im Gehäuse (15) schwenkbar gelagerte Stellwelle (10) mit einem Nockenteil (28) zwischen obere Bereiche der Riegelbacken (18,19) zwischengreift, und die Riegelbacken (18,19) um Schwenkachsen schwenkbar sind, die parallel zur Mittelachse der Stellwelle (10) ausgerichtet und im Abstand unterhalb des Nockenteils (28) der Stellwelle (10) gelegen sind.

5. Suprakonstruktion nach Anspruch 4, **dadurch gekennzeichnet,** daß die Riegelbacken (18,19) dem Nockenteil der Stellwelle (10) in Einbaustellung zugewandte, zylindersegmentförmige Ausnehmungen (26,27) aufweisen.

6. Suprakonstruktion nach Anspruch 4 oder 5, **dadurch gekennzeichnet,** daß eine Feder (29) vorgesehen ist, die die Riegelbacken (18,19) in ihre Entriegelungsstellung zu schwenken bestrebt ist.

7. Suprakonstruktion nach Anspruch 6, **dadurch gekennzeichnet,** daß die Feder (29) von einem U-förmigen Federdrahtkörper gebildet ist, dessen Längs-schenkel (30) Öffnungen (31) im Gehäuse (15) und Ausnehmungen (32,33) im oberen Bereich der Riegelbacken (18,19) durchgreifen und in Einbaustellung im wesentlichen parallel zu den Schwenkachsen der Riegelbacken (18,19) ausgerichtet sind.

8. Suprakonstruktion nach einem der Ansprüche 3 bis 7, **dadurch gekennzeichnet,** daß die Stellwelle (10) in fluchtenden Öffnungen (34) in gegenüberliegenden Seitenwänden des Gehäuses (15) der Riegelvorrichtung (9) schwenkbar gelagert und der Bereich zwischen beiden Lagerbereichen (35,36) als zumindest annähernd elliptischer Nockenteil (28) ausgebildet ist.

9. Suprakonstruktion nach einem der Ansprüche 3 bis 8, **dadurch gekennzeichnet,** daß die Stellwelle (10) einen Bund (37) aufweist, der in Einbaustellung an der der Führungs- und Verriegelungsvorrchtung (11) zugewandten Außenseite des Gehäuses (15) anliegt.

10. Suprakonstruktion nach einem der Ansprüche 3 bis 9, **dadurch gekennzeichnet,** daß der sich an den Bund (37) anschließende, zur Führungs- und Verriegelungsvorrichtung (11) führende Bereich (38) der Stellwelle (10) an parallel gegenüberliegenden Seiten mit einer Abflachung (39) versehen ist.

11. Suprakonstruktion nach einem der Ansprüche 3 bis 10, **dadurch gekennzeichnet,** daß die Riegelbacken (18,19) an ihrer Außenseite eine annähernd mittig angeordnete, zylindersegmentförmige, sich über die gesamte Backenbreite erstreckende Lagerausnehmung (20,21) aufweisen und in Einbaustellung in Eingriff mit einem konformen Lageransatz (16,17) an der Innenseite gegenüberliegender Seitenwände des Gehäuses (15) stehen.

12. Suprakonstruktion nach einem der Ansprüche 3 bis 11, **dadurch gekennzeichnet,** daß die Riegelbacken (18,19) innenseitig eine zur Oberfläche des Kugelkopfes (5) des Implantats (6) konforme, teilkugelige Ausnehmung aufweisen, deren unterer Rand (24,25) in Eingriffsstellung unterhalb des Mittelpunktes des Kugelkopfes (5) gelegen ist.

13. Suprakonstruktion nach einem der Ansprüche 3 bis 12, **dadurch gekennzeichnet,** daß die Führungs- und Verriegelungsvorrichtung (11) für den das Betätigungsteil bildenden Zahn (13) einen Schwenkträger (14) für diesen und ein gabelförmiges Widerlager (12) umfaßt.

14. Suprakonstruktion nach Anspruch 13, **dadurch gekennzeichnet,** daß die Gabelschenkel (53,54) des Widerlagers (12) fluchtende Lageröffnungen (56,57) für die Durchführung und Lagerung der Stellwelle (10) aufweisen und in Einbaustellung in die beiden Zähne (3) der Zahnprothese (2) eingelassen sind, die dem das Betätigungsteil bildenden Zahn (13) benachbart sind, und der Gabelboden (55) in den Prothesensattel (4) eingelassen ist und oberseitige Riegelausnehmungen (51,52) im Bereich seiner Vorder- und seiner Rückseite aufweist.

15. Suprakonstruktion nach Anspruch 13 oder 14, **dadurch gekennzeichnet,** daß der Schwenkträger (14) für eine Durchführung des abgeflachten Bereiches (38) der Stellwelle (10) eine zu diesem Wellenbereich (38) konforme Ausnehmung (43) aufweist, die in Richtung ihrer Flachseiten eine die Querschnittsabmessung des durchgeführten Wellenbereichs (38) zumindest um die gegenseitige Eingriffstiefe der Riegelausnehmungen übersteigende Abmessung hat.

16. Suprakonstruktion nach einem der Ansprüche 13 bis 15, **dadurch gekennzeichnet,** daß der Schwenkträger (14) an seiner Vorder- und seiner Rückseite mit zum Widerlager (12) der Führungs- und Verriegelungsvorrichtung (11) hin vorstehenden Riegelansätzen (48,49) versehen ist, die in Grundstellung des Schwenkträgers (14) in die Riegelausnehmungen (51,52) des Widerlagers (12) eingreifen.

17. Suprakonstruktion nach einem der Ansprüche 13 bis 16, **dadurch gekennzeichnet,** daß im Schwenkträger (14) eine Feder untergebracht ist, die sich einseitig an der Stellwelle (10) abstützt und bestrebt ist, den Schwenkträger (14) relativ zur Stellwelle (10) in seine verriegelte Grundstellung zu drücken.

## Claims

1. A prosthetic superstructure with a locking device (9) which can be fitted and secured on a connection element (5), particularly a spherical head of an implant (6) and accommodated in a denture (2), characterised in that the locking device (9) comprises locking elements (18, 19) adapted to be moved by an adjusting member (10) into an outer locking engagement with the connection element (5) of the implant (6) and in that the end of the adjusting member (10) which is remote from the locking elements (18, 19) can be actuated by an artificial tooth (13) which is disposed in the denture (2) and close to the locking device (9).

2. A superstructure according to claim 1, characterised in that the tooth (13) of the denture (2) which is associated as an actuating part for the adjusting member (10) can be moved against the action of a spring force and independently of the adjusting member (10) out of a locked basic position on the prosthesis saddle (4) and in the direction of its longitudinal axis into a released position and can, while in the released position and together with the adjusting member (10), be moved into a catch-secured unlocking position.

3. A superstructure according to claim 1 or 2, characterised in that in the installed position, the locking device (9) is accommodated in a first tooth (3) of the denture (2) while there is provided as an adjusting member (10) a positioning spindle which traverses the second tooth (3) adjacent the first tooth (3) of the denture being coupled as an actuating part to a third tooth (13) adjacent the second tooth (3), said actuating part being adapted to be lifted off and pivoted away from the prosthesis saddle (4) by a guiding and locking device (11).

4. A superstructure according to one of claims 1 to 3, characterised in that the locking device (9) comprises a housing (15) which is open towards the jaw and which supports two locking jaws (18, 19) which are adapted for limited and oppositely directed movement and in that the positioning spindle (10) pivotally mounted in the housing(15) has a cam part (28) which engages between upper parts of the locking jaws (18, 19), these latter being adapted to pivot about pivot axes which are situated parallel with the central axis of the positioning spindle (10) and at a distance below the cam part (28)of the positioning spindle (10).

5. A superstructure according to claim 4, characterised in that the locking jaws (18, 19) have, in the form of segments of a cylinder, cut-outs (26, 27) which, in the installed position, face the cam part of the positioning spindle (10).

6. A superstructure according to claim 4 or 5, characterised in that a spring (29) is provided which seeks to pivot the locking jaws (18, 19) into their unlocking position.

7. A superstructure according to claim 6, characterised in that the spring (29) is constituted by a U-shaped member of spring wire, the longitudinal arms (30) of which engage through apertures (31) in the housing (15) and cut-outs (32, 33) in the upper part of the locking jaws (18, 19) and which, when in the installed position, are aligned substantially parallel with the pivot axes of the locking jaws (18, 19).

8. A superstructure according to one of claims 3 to 7, characterised in that the positioning spindle (10) is pivotally mounted in aligned apertures (34) in oppositely disposed side walls of the housing (15) of the locking device (9) and in that the area between the two bearing zones (35, 36) is constructed as an at least approximately elliptical cam part (28).

9. A superstructure according to one of claims 3 to 8, characterised in that the positioning spindle (10) has a shoulder (37) which, in the installed position, bears on that outside face of the housing (15) which is towards the guiding and locking device (11).

10. A superstructure according to one of claims 3 to 9, characterised in that the portion (38) of the positioning spindle (10) which is adjacent the shoulder (37) and which leads to the guiding and locking device (11) is provided with a flattening (39) on sides which are opposite each other.

11. A superstructure according to one of claims 3 to 10, characterised in that on their outside face, the locking jaws (18, 19) have an approximately centrally disposed bearing recess (20, 21) shaped like a segment of a cylinder and extending over the entire width of the jaw and which, in the installed position, engage a matching bearing projection (16, 17) on the inside of oppositely disposed side walls of the housing (15).

12. A superstructure according to one of claims 3 to 11, characterised in that the locking jaws (18, 19) have on the inside and matching the surface of the spherical head (5) of the implant (6) a partially spherical recess of which the bottom edge (24, 25) is situated in the position of engagement below the central point of the spherical head (5).

13. A superstructure according to one of claims 3 to 12, characterised in that the guiding and locking device (11) comprises a bifurcated abutment (12) and a pivoting carrier (14) for the tooth (13) which constitutes the actuating member.

14. A superstructure according to claim 13, characterised in that the bifurcated arms (53, 54) of the abutment (12) have aligned bearing apertures (56, 57) for passage and bearing of the positioning spindle (10) and in that in the installed position they are let into the two teeth (3) of the denture (2) which are adjacent the tooth (13) which constitutes the actuating member and in that the bottom (55) of the bifurcated member is let into the prothesis saddle (4) and comprises on the top locking recesses (51, 52) in the region of its front and rear sides.

15. A superstructure according to claim 13 or 14, characterised in that for passage of the flattened portion (38) of the positioning spindle (10), the pivoting carrier (14) has, matching this spindle portion (38), a cut-out (43) which in the region of its flat sides has a dimension which is greater than the cross-sectional dimension of the accommodated portion (38) of the spindle by at least the depth of engagement of the locking recesses.

16. A superstructure according of one of claims 13 to 15, characterised in that on its front and rear sides, the pivoting carrier (14) is provided with locking projections (48, 49) which project towards the abutment (12) of the guiding and locking device (11) and which in the basic position of the pivoting carrier (14) engage the locking recesses (51, 52) of the abutment (12).

17. A superstructure according to one of claims 13 to 16, characterised in that there is in the pivoting carrier (14) a spring which is biased at one end on the positioning spindle (10) and seeks to press the pivoting carrier (14) into its locked basic position in relation to the positioning spindle (10).

## Revendications

1. Superstructure prothétique, comprenant un dispositif de verrouillage (9) qui peut être logé dans une prothèse dentaire (2) et appliqué sur une partie de liaison (5), en particulier une tête sphérique, d'un implant (6) et y être fixé, caractérisée en ce que le dispositif de verrouillage (9) comprend des parties de verrou (18, 19) qui peuvent être déplacées au moyen d'un élément de manoeuvre (10) en engagement de verrouillage ou hors de cet engagement avec la partie de liaison (5) de l'implant (6) et en ce que l'extrémité de l'élément de manoeuvre (10) opposée aux parties de verrou (18, 19) peut être commandée au moyen d'une dent artificielle (13) agencée à proximité du dispositif de verrouillage (9) dans la prothèse dentaire (2).

2. Superstructure suivant la revendication 1, caractérisée en ce que la dent (13) de la prothèse dentaire (2) affectée à l'élément de manoeuvre (10) comme pièce de commande peut être déplacée à l'encontre d'une force élastique et indépendamment de l'élément de manoeuvre (10) d'une position de base verrouillée sur le support de prothèse (4) dans la direction de son axe longitudinal en position de dégagement et, en position de dégagement, conjointement avec l'élément de manoeuvre (10) dans une position de déverrouillage assurée par un cliquet.

3. Superstructure suivant la revendication 1 ou 2, caractérisée en ce que, en position d'emboîtement, le dispositif de verrouillage (9) est logé dans une première dent (3) de la prothèse dentaire (2) et en ce qu'il est prévu comme élément de manoeuvre (10) un arbre de manoeuvre qui traverse une deuxième dent (3) de la prothèse dentaire voisine de la première dent (3) et est couplé à une troisième dent (13) voisine de la deuxième dent (3) comme partie de commande, qui est supportée de manière à pouvoir être relevée et à pivoter au moyen d'un dispositif de guidage et de verrouillage (11) du support (4) de la prothèse.

4. Superstructure suivant l'une quelconque des revendications 1 à 3, caractérisée en ce que le dispositif de verrouillage (9) comprend un boîtier (15), ouvert côté mâchoire, appuyant deux mors de verrou (18, 19) de manière qu'ils puissent pivoter de manière limitée en sens inverse, l'arbre de manoeuvre (10) monté à pivotement dans le boîtier (15) s'engage en position intermédiaire par une partie saillante (28) entre les zones supérieures des mors de verrou (18, 19) et les mors de verrou (18, 19) peuvent pivoter autour d'axes de pivotement qui sont alignés parallèlement à l'axe central de l'arbre de manoeuvre (10) et sont situés à distance en dessous de la partie saillante (28) de l'arbre de manoeuvre (10).

5. Superstructure suivant la revendication 4, caractérisée en ce que les mors de verrou (18,19) présentent des cavités (26, 27) en forme de segment de cylindre, tournés vers la partie saillante de l'arbre de manoeuvre (10) en position d'emboîtement.

6. Superstructure suivant la revendication 4 ou 5, caractérisée en ce qu'il est prévu un ressort (29) qui tend à faire pivoter les mors de verrou (18, 19) dans leur position de déverrouillage.

7. Superstructure suivant la revendication 6, caractérisé en ce que le ressort (29) est formé d'un corps en fil métallique élastique en U, dont les branches allongées (30) traversent des ouvertures (31) du boîtier (15) et des cavités (32, 33) dans la zone supérieure des mors de verrou (18, 19) et sont alignées, en position d'emboîtement, sensiblement de manière parallèle aux axes de pivotement des mors de verrou (18, 19).

8. Superstructure suivant l'une quelconque des revendications 3 à 7, caractérisée en ce que l'arbre de manoeuvre (10) est monté à pivotement dans des ouvertures alignées (34) de parois latérales opposées du boîtier (15) du dispositif de verrouillage (9) et la zone comprise entre les deux zones de palier (35, 36) se présente sous la forme d'une partie saillante (28) au moins approximativement elliptique.

9. Superstructure suivant l'une quelconque des revendications 3 à 8, caractérisée en ce que l'arbre de manoeuvre (10) présente un collet (37) qui s'appuie, en position d'emboîtement, sur la face externe du boîtier (15) tournée vers le dispositif de guidage et de verrouillage (11).

10. Superstructure suivant l'une quelconque des revendications 3 à 9, caractérisée en ce que la zone (38) de l'arbre de manoeuvre (1O) raccordée au collet (37) et menant au dispositif de guidage et de verrouillage (11) est pourvue d'un méplat (39) sur ses faces parallèles opposées.

11. Superstructure suivant l'une quelconque des revendications 3 à 10, caractérisée en ce que les mors de verrou (18, 19) présentent sur leur face externe une cavité (20, 21) formant palier agencée approximativement en position centrale, en forme de segment de cylindre, s'étendant sur toute la largeur des mors et, en position d'emboîtement, s'engagent sur une butée de palier correspondante (16, 17) sur la paroi latérale du boîtier (15) en regard de la face interne.

12. Superstructure suivant l'une quelconque des revendications 3 à 11, caractérisée en ce que les mors de verrou (18, 19) présentent côté interne une cavité de forme partiellement sphérique correspondant à la surface de la tête sphérique (5) de l'implant (6), dont le bord interne (24, 25) est situé, en position d'emboîtement, en dessous du point central de la tête sphérique (5).

13. Superstructure suivant l'une quelconque des revendications 3 à 12, caractérisée en ce que le dispositif de guidage et de verrouillage (11) comprend pour la dent (13) formant la partie de commande, un support pivotant (14) pour celle-ci et une butée (12) en forme d'étrier.

14. Superstructure suivant la revendication 13, caractérisée en ce que les branches d'étrier (53, 54) de la butée (12) présentent des ouvertures de palier alignées (56, 57) pour laisser passer et supporter l'arbre de manoeuvre (10) et sont enchâssées, en position d'emboîtement, dans les deux dents (3) de la prothèse dentaire (2), qui sont voisines de la dent (13) formant la partie de commande et en ce que la base (55) de l'étrier est enchâssée dans le support de prothèse (4) et présente des cavités de verrouillage supérieures (51, 52) dans la zone de sa face avant et de sa face arrière.

15. Superstructure suivant la revendication 13 ou 14, caractérisée en ce que le support pivotant (14) présente, pour laisser passer la zone à méplats (38) de l'arbre de manoeuvre (10), une cavité (43) correspondant à cette zone d'arbre (38), qui a, dans la direction de ses faces plates, une dimension dépassant la dimension en section transversale de la zone d'arbre traversée (38) au moins de la profondeur d'engagement mutuelle des cavités de verrouillage.

16. Superstructure suivant l'une quelconque des revendications 13 à 15, caractérisée en ce que le support pivotant (14) est pourvu sur sa face avant et sa face arrière de saillies de verrouillage (48, 49) faisant saillie vers la butée (12) du dispositif de guidage et de verrouillage (11), qui s'engagent, en position de base du support pivotant (14), dans les cavités de verrouillage (51, 52) de la butée (12).

17. Superstructure suivant l'une quelconque des revendications 13 à 16, caractérisée en ce que le support pivotant (14) reçoit un ressort, qui s'appuie d'un côté sur l'arbre de manoeuvre (10) et tend à presser le support pivotant (14) par rapport à l'arbre de manoeuvre (10) dans sa position de base verrouillée.
